# EUROPEAN PATENT APPLICATION

(11) **EP 4 609 973 A1**
(43) Date of publication of application: **03.09.2025**
(21) Application number: 25159906.4
(22) Date of filing: 25.02.2025
(51) Int. Cl.: B23B 47/28, B25H 1/00

(54) **DRILL GUIDE SYSTEM**

(30) Priority: 29.02.2024 US 202463559585 P; 21.02.2025 US 202519059707
(71) Applicant: BAM IP Holding LLC, Saint Charles, IL 60175 (US)
(72) Inventor: Hall, Taylor James, Palatine, Illinois, 60074 (US)
(74) Representative: Hoeger, Stellrecht & Partner Patentanwälte mbB

(57) **Abstract**

A drill guide and an edge guide attachment for a drill guide, the drill guide having a base having a bottom defining a bottom plane, the edge guide attachment comprises: a first mounting arm configured to mount to the base; an fence having a workpiece abutment surface extending below the bottom plane when mounted to the drill guide such that the workpiece abutment surface can engage an edge of the workpiece when the base rests on a surface of the work-piece, the fence adjustably positionable along the first mounting arm; a ruler fixably attachable to the base having measuring demarcations thereon for indicating a spacing of the abutment surface from a predetermined location of the drill guide, the fence movable relative to the rule when the ruler is attached to the base.

## Description

### CROSS-REFERENCE TO RELATED PATENT APPLICATIONS

This Patent Application claims the benefit of U.S. Provisional Patent Application No. 63/559,585, filed February 29, 2024 , the entire teachings and disclosure of which are incorporated herein by reference thereto.

### FIELD OF THE INVENTION

This invention generally relates to a drill guide and an edge guide attachment for use with a drill guide.

### BACKGROUND OF THE INVENTION

Drill guides are used for precisely and repeatedly drilling holes within one or more workpieces. The drill guide acts to guide the drill bit as the user plunges the drill bit into the workpiece. The drill guide helps remove error that may occur when the drill bit is simply being guided by the user, e.g. if the user is providing all of the guiding of the drill and drill bit by hand.

Further, a drill guide can be used to prevent over drilling or drilling too far into a workpiece by providing travel limits, e.g. depth stops.

A drill guide may often be used to drill one or more holes in a workpiece at a desired location in a workpiece. For example, it may be desirable to form multiple holes at a same offset from an edge of a workpiece.

The present invention provides improvements over the current state of the art in drill guide systems.

The solutions in accordance with the present invention comprise, in particular, the combinations of features defined by the following embodiments numbered consecutively.
1. An edge guide attachment for a drill guide, the drill guide having a base having a bottom defining a bottom plane, the edge guide attachment comprising:
   a first mounting arm configured to mount to the base;
   an fence having a workpiece abutment surface extending below the bottom plane when mounted to the drill guide such that the workpiece abutment surface can engage an edge of the workpiece when the base rests on surface of the workpiece, the fence adjustably positionable along the first mounting arm;
   a ruler fixably attachable to the base having measuring demarcations thereon for indicating a spacing of the abutment surface from a predetermined location of the drill guide, the fence movable relative to the rule when the ruler is attached to the base.
2. The edge guide attachment of embodiment 1, further comprising a second mounting arm configured to mount to the base in parallel relation to the first mounting arm, the fence being movable relative to the second mounting arm.
3. The edge guide attachment of embodiment 2, wherein the ruler is located between the first and second mounting arms when assembled.
4. The edge guide attachment of embodiment 1, wherein the workpiece abutment surface has an aperture therethrough, the ruler extending through the aperture when assembled.
5. The edge guide attachment of embodiment 2, wherein the first and second mounting arms have threaded ends configured to threadedly mate with the base to secure the first and second mounting arms to the base.
6. The edge guide attachment of embodiment 2, wherein the first and second mounting arms extend through corresponding first and second apertures through the workpiece abutment surface when assembled.
7. The edge guide attachment of embodiment 6, further comprising first and second locking members configured to releasably lock the fence to the first and second mounting arms to selectively fix the position of the fence along the first and second mounting arms.
8. A drill guide system comprising:
   a drill guide including:
   a base having a bottom defining a bottom plane;
   first and second guides operably attached to the base;
   a slide member mounted to the guides for sliding motion along the first and second guides towards and away from the base;
   an edge guide attachment of embodiment 1.
9. The system of embodiment 8, wherein the base includes a mounting slot receiving an end of the ruler therein, when assembled.
10. The system of embodiment 8, wherein when the edge guide attachment is assembled with the base, the ruler remains fixed relative to the base as the fence is moved along the first mounting arm relative to the base.
11. The system of embodiment 8, wherein the chuck assembly defines a drilling axis and the spacing is the spacing between the drilling axis when it is oriented orthogonal to the bottom plane and the workpiece abutment surface.
12. The system of embodiment 8, wherein the slide member has a drill chuck mounted thereto for rotation relative to the slide member about a chuck axis, the drill chuck having an input end that is engageable by the chuck of an external drill for driving the drill chuck for rotation about the chuck axis with the external drill.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a perspective illustration of a drill guide system;
FIG. 2 is a partial exploded illustration of the drill guide system having the edge guide attachment removed and in exploded form;

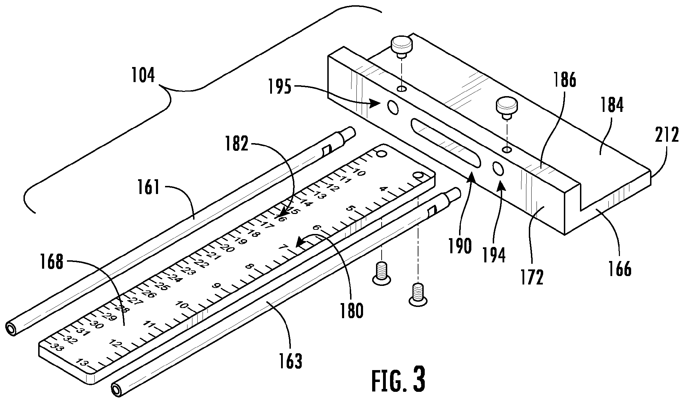

FIG. 3 is an enlarged exploded illustration of the edge guide attachment;
FIG. 4 is a bottom perspective illustration of the drill guide system of FIG. 1 with the edge guide attachment detached from the base of the drill guide; and
FIG. 5 is a cross-sectional illustration of the drill guide system of FIG. 1.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

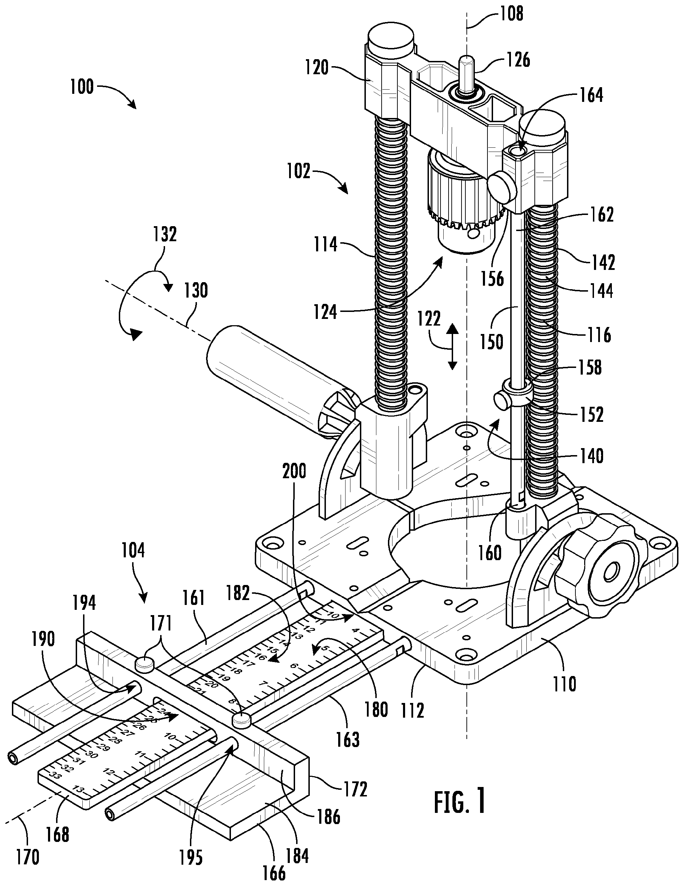

FIG. 1 illustrates a drill guide system 100. The drill guide system 100 includes a drill guide 102 and an edge guide attachment 104 attached to the drill guide 102. The drill guide system 100 is configured for performing accurate drilling of a work piece. In particular, the drill guide system 100 is configured for repeatable and accurate drilling depth and position.

The drill guide 102 is configured to allow a user to perform controlled and precise drilling of the workpiece. In particular, the drill guide 102 is used to control the drilling motion about a drilling axis 108.

The drill guide 102 has a base 110 that has a bottom that generally defines a bottom plane. In use, the base 110 may rest on the workpiece to be drilled or on a workbench or other object.

A pair of guides 114, 116 are operably attached to the base 110. A slide member 120 is carried by the guides 114, 116 for sliding motion along the guides 114, 116 towards or away from the base 110 as illustrated by arrow 122.

In this example, the slide member 120 has a drill chuck 124 mounted thereto that can operably hold a drill bit or other boring bit. The drill chuck 124 is configured to rotate about drilling axis 108. The drill chuck 124 has an input end 126 that can be attached to a power tool such as a drill to provide an input to drive the drill chuck 124. For example, the input end 126 could be engaged by a chuck of an external drill for transferring torque from the external drill to the drill chuck 124.

The slide member 120 extends laterally between the guides 114, 116.

In this example, the guides 114, 116 straddle the drill axis 108 and the drill chuck 124.

In FIG. 1, the guides 114, 116 and slide member 120 are oriented relative to the base 110 and its base plane such that the drill axis 108 is orthogonal to the base plane and thus would be orthogonal to a planar workpiece.

However, the drill guide 102 is configured such that the guides 114, 116 may be pivoted about axis 130 relative to base 110 so as to alter the drilling angle relative to a workpiece (i.e. relative to the base plane), see e.g. arrow 132. In some embodiments, this angle may be 60 degrees from orthogonal to the base plane about axis 130 for a total variation of approximately 120 degrees. However, other amounts and no amounts of angular adjustment are contemplated.

During drilling operations, the user will typically push the slide member 120 towards base 110 using a plunging motion. The guides 114, 116 will accurately control the plunging motion to provide accurately located and formed holes in the workpiece.

A depth stop arrangement 140 is provided so that the depth of the plunging motion can be limited to prevent over penetration of the drilling motion into the workpiece and/or to provide for repeated depth drilling.

In this example, the depth stop arrangement 140 is not provided by the guides 114, 116. In some prior implementations, a depth stop was mounted to one of the guides 114, 116 that would limit the sliding motion of the slide member 120 along the guide 114, 116. The user would simply slide the depth stop along the corresponding guide 114, 116 to limit motion. Unfortunately, this resulted in compression of the corresponding spring 142 carried by the shaft 144 of the guide 114, 116. However, by doing this, this created a nonuniform loading on the slide member 120 by the springs 142 of the pair of guides 114, 116 which resulted in generating a torque on the slide member 120 such that the drill chuck 124 would tilt relative to the shafts 144 reducing the accuracy of the drilling operation.

In this example, the depth stop arrangement 140 includes a separate stop rod 150 and depth stop collar 152 that is movable axially along the stop rod 150. Here, the depth stop collar 152 does not interfere or interact with springs 142 and eliminates a problem with prior art depth stop arrangements.

In use, an abutment surface 156 of the slide member 120 will contact abutment surface 158 of the depth stop collar 152 when the user has plunged the slide member 120 the desired distance along axis 108 (e.g. formed the desired depth drilling action).

In this example, the stop rod 150 is mounted in fixed, parallel relation relative to shafts 144 of the guides 114, 116. However, the slide member 120 may move relative to stop rod 150. In this example, end 160 of stop rod 150 is threaded into shaft base 162 that pivotally attaches the guides 116 to base 110.

The opposite end 162 of stop rod 150 is slidably received in slide aperture 164 formed in slide member 120. The slide aperture 164 allows the slide member 120 to slide relative to stop rod 150.

Adjustment of the position of the stop collar 152 along stop rod 150 adjusts and limits the amount of sliding motion of slide member 120 along the guides 114, 116.

Again, by having the stop arrangement 140 independent of the springs 142 and guides 114, 116, the slide member 120 is not exposed to uneven forces and thus torques as it is transitioned towards base 110.

In addition to accurate plunging, the drill guide system 100 provides for accurate location relative to an edge of a workpiece. In particular, an edge guide attachment 104 is provided that can locate the drill guide 102 relative to the edge of a workpiece.

The edge guide attachment 104 generally includes at least one and typically two mounting arms 161, 163, a fence 166 and a ruler 168.

In this example, the edge guide attachment 104 is removable attachable to the drill guide 102 and particularly to the base 110.

Here, the mounting arms 161, 163 thread into base 110.

Flats on the sides of the mounting arms 161, 163allow for engagement with a wrench or other tool for assisting in threadedly attaching the mounting arms 161, 163to the base 110.

The mounting arms 161, 163are generally parallel to offset axis 170.

The fence 166 is adjustably positionable along the mounting arms 161, 163. Locking members in the form of locking screws 171 can fix the position of the fence 166 relative to mounting arms 161, 163. Other locking members such as pins or catches could be provided.

The fence 166 includes a workpiece abutment surface 172 that extends below the bottom plane (e.g. bottom 112) of the base 110. As such, when the base 110 rests on a workpiece, the workpiece abutment surface 172 will be able to engage an edge or side of the workpiece.

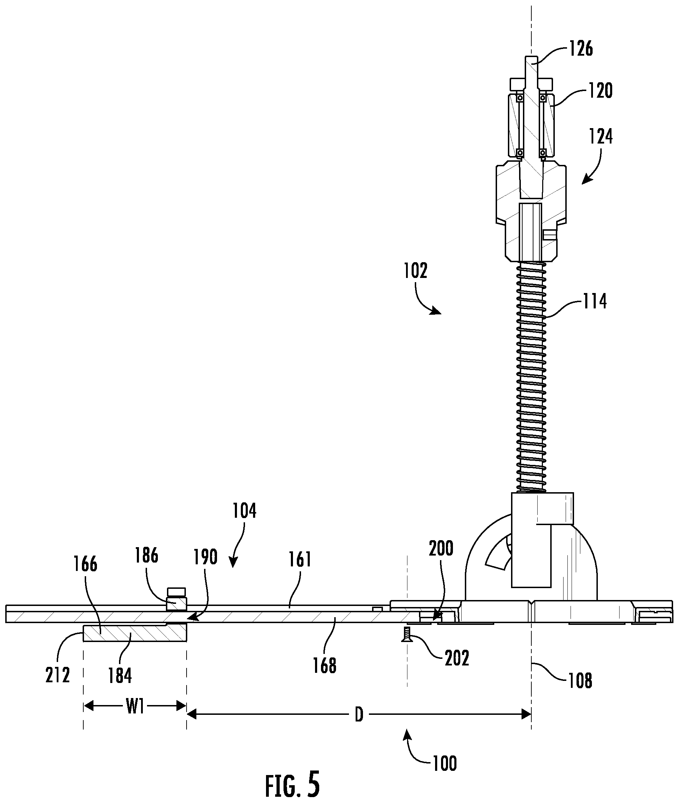

Ruler 168 allows the user to precisely locate fence 166 and particularly workpiece abutment surface 172 relative to the drill guide 102 and particularly relative to a predetermined location of the drill guide 102. In this example, the predetermined location is the drill axis 108 and particularly the drill axis 108 when it is oriented orthogonal to the base plane. The distance D between the drill axis 108 and the workpiece abutment surface 172 is illustrated in FIG. 5.

The ruler 168 includes measuring demarcations 180, 182 for identifying the offset of the workpiece abutment surface 172 from the drill axis 108. Thus, if the user aligns the workpiece abutment surface 172 with the desired offset for drilling relative to the edge of the workpiece as represented by the measuring demarcations 180, 182 a hole drilled using the drill guide will be offset from the edge of the workpiece that amount.

In some embodiments, the demarcations may provide both standard and metric units. In some embodiments only one measurement unit, e.g. only standard or only metric units may be provided. The demarcations may be machined into the surface of the ruler or printed on the ruler.

In this example, the ruler 168 is positioned laterally between the mounting arms 161, 163.

The fence 166 is an L-shaped member having a foot 184 and an upstanding wall 186. The upstanding wall 186 provides workpiece abutment surface 172. In other examples, the foot 184 may be eliminated.

The upstanding wall 186 includes a ruler receiving aperture 190 through which a free end of the ruler 168 extends when assembled. In this example, the ruler receiving aperture 190 extends through the workpiece abutment surface 172.

Similarly, mounting arm apertures 194, 195 extend through the upstanding wall 186 and slidably receive the mounting arms 161, 163. The locking screws 171 extend through a top end of the upstanding wall 186 and selectively engage and release the mounting arms 161, 163 for allowing for adjustment of the position of the fence 166.

The base 110 includes a mounting slot 200 that receives an end of the ruler 168. Screws 202 releasably attach the ruler 168 to the base 110. In this example, slot 200 extends through a vertical side 210 of base 110. The use of the slot 200 helps maintain the proper orientation for ruler 168 to base 110.

FIGS. 1 and 5 illustrate the fence 166 mounted to the mounting arms 161, 163 in a first orientation with foot 184 extending away from the upstanding wall 186 in a direction that extends away from the base 110. This orientation can be used when the hole to be drilled into a workpiece is sufficiently far from an edge of the workpiece that the base 110 would not extend outward beyond the adjacent edge of the workpiece. In other words, the spacing of the hole to be drilled from the edge is greater than the spacing from axis 108 to the side of the base through which slot 200 extends.

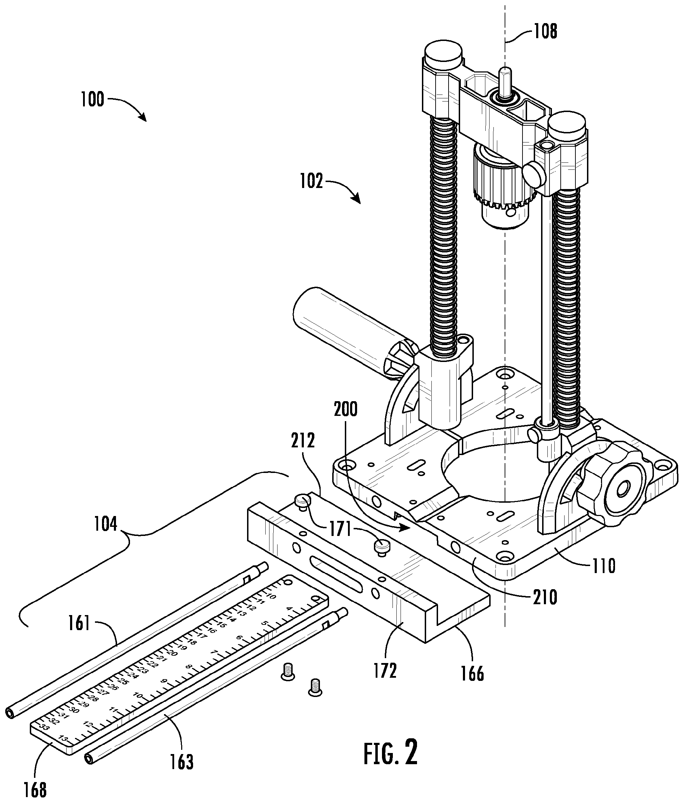

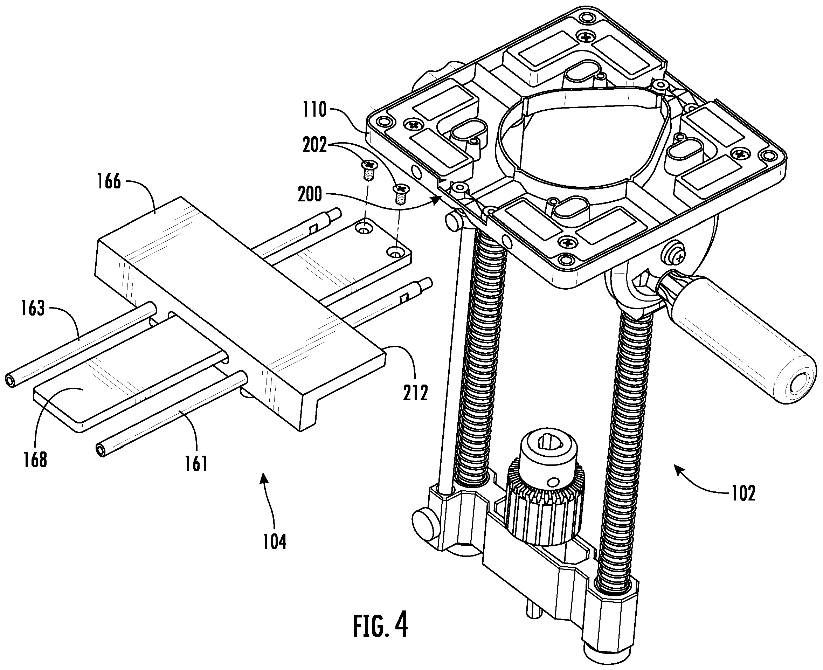

FIGS. 2 and 4 illustrate the fence 166 in a second orientation (FIG. 4 actually mounted). In this second orientation, the foot 184 extends from the upstanding wall 186 towards the base 110. This orientation can be used when the hole to be drilled into the workpiece is too close to the edge of the workpiece that the base 110 must extend outward beyond the edge of the workpiece. Here, foot 184 may extend under the base 110 so as to abut the edge of the workpiece that the base extends outward beyond. In other words, the spacing of the hole to be drilled from the edge of the workpiece is less than the spacing from axis 108 to the side of the base 110.

The free end 212 of foot 184 provides a second abutment surface that can abut the edge of the workpiece to properly orient the drill guide 102 relative to the edge of the workpiece.

When oriented in this second orientation, either 1) the ruler 168 has a set of demarcations that correspond to this configuration or the user must subtract the width W1 from the demarcations 180, 182 so as to know the proper spacing of the axis 108 from the abutted edge of the workpiece.

Thus, in one embodiment, the first set of demarcations 180 may correspond to the offset when using the first orientation as illustrated in FIG. 1 and the second set of demarcations 182 may be used in the second orientation illustrated in FIG. 4.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. An edge guide attachment for a drill guide, the drill guide having a base having a bottom defining a bottom plane, the edge guide attachment comprising:
a first mounting arm configured to mount to the base;
an fence having a workpiece abutment surface extending below the bottom plane when mounted to the drill guide such that the workpiece abutment surface can engage an edge of the workpiece when the base rests on surface of the workpiece, the fence adjustably positionable along the first mounting arm;
a ruler fixably attachable to the base having measuring demarcations thereon for indicating a spacing of the abutment surface from a predetermined location of the drill guide, the fence movable relative to the rule when the ruler is attached to the base.

2. The edge guide attachment of claim 1, further comprising a second mounting arm configured to mount to the base in parallel relation to the first mounting arm, the fence being movable relative to the second mounting arm.

3. The edge guide attachment of claim 2, wherein the ruler is located between the first and second mounting arms when assembled.

4. The edge guide attachment of claim 1, wherein the workpiece abutment surface has an aperture therethrough, the ruler extending through the aperture when assembled.

5. The edge guide attachment of claim 2, wherein the first and second mounting arms have threaded ends configured to threadedly mate with the base to secure the first and second mounting arms to the base.

6. The edge guide attachment of claim 2, wherein the first and second mounting arms extend through corresponding first and second apertures through the workpiece abutment surface when assembled.

7. The edge guide attachment of claim 6, further comprising first and second locking members configured to releasably lock the fence to the first and second mounting arms to selectively fix the position of the fence along the first and second mounting arms.

8. A drill guide system comprising:
a drill guide including:
a base having a bottom defining a bottom plane;
first and second guides operably attached to the base;
a slide member mounted to the guides for sliding motion along the first and second guides towards and away from the base;
an edge guide attachment of claim 1.

9. The system of claim 8, wherein the base includes a mounting slot receiving an end of the ruler therein, when assembled.

10. The system of claim 8, wherein when the edge guide attachment is assembled with the base, the ruler remains fixed relative to the base as the fence is moved along the first mounting arm relative to the base.

11. The system of claim 8, wherein the chuck assembly defines a drilling axis and the spacing is the spacing between the drilling axis when it is oriented orthogonal to the bottom plane and the workpiece abutment surface.

12. The system of claim 8, wherein the slide member has a drill chuck mounted thereto for rotation relative to the slide member about a chuck axis, the drill chuck having an input end that is engageable by the chuck of an external drill for driving the drill chuck for rotation about the chuck axis with the external drill.
